# EUROPÄISCHE PATENTSCHRIFT

(11) **EP 3 409 951 B1**
(45) Veröffentlichungstag und Bekanntmachung des Hinweises auf die Patenterteilung: **30.09.2020**
(21) Anmeldenummer: 18174125.7
(22) Anmeldetag: 24.05.2018
(51) Int. Cl.: F15B 11/072, F15B 21/14, B21J 15/22

(54) **DRUCKÜBERSETZER ZUM ANTRIEB VON HYDRAULIKWERKZEUGEN**
PRESSURE BOOSTER FOR DRIVING OF HYDRAULIC TOOLS
MULTIPLICATEUR DE PRESSION DESTINÉ À L'ENTRAÎNEMENT D'OUTILS HYDRAULIQUES

(30) Priorität: 29.05.2017 DE 102017111657
(43) Veröffentlichungstag der Anmeldung: 05.12.2018
(73) Patentinhaber: TKR Spezialwerkzeuge GmbH, 58285 Gevelsberg (DE)
(72) Erfinder: Zurmühlen, Martin, 44795 Bochum (DE); Enriquez, Heinz, 58455 Witten (DE)
(74) Vertreter: Kalkoff & Partner Patentanwälte PartmbB

(56) Entgegenhaltungen:
- EP-A2- 1 930 567
- US-A- 2 938 347
- Anonymous: "Strom aus Luft | maschine+werkzeug", , 1. September 2010 (2010-09-01), XP055509179, Gefunden im Internet: URL:https://www.maschinewerkzeug.de/periph erie/uebersicht/artikel/strom-aus-luft-114 2958.html [gefunden am 2018-09-24]
- Deprag: "GET Turbinengenerator", , 1. März 2016 (2016-03-01), XP055509148, Gefunden im Internet: URL:https://www.deprag.com/fileadmin/bilde r_content/emedia/broschueren_pics/emedia_d ruckluftmotoren/D6100/D6100de.pdf [gefunden am 2018-09-24]

## Beschreibung

Die Erfindung betrifft einen Druckübersetzer zum Antrieb von Hydraulikwerkzeugen, mit einer Gas- oder Luftdruck angetriebenen Pneumatikeinheit mit einer an einen Drucklufteingang anschließenden Systemleitung und einer mit der Pneumatikeinheit verbundenen Hydraulikeinheit mit einem Hydraulikanschluss zum fluiddichten Anschluss des Hydraulikwerkzeugs an die Hydraulikeinheit.

Druckübersetzer sind in vielfältigen Ausgestaltungen aus dem Stand der Technik bekannt. Derartige Vorrichtungen dienen bspw. zum Antrieb von hydraulisch angetriebenen Hydraulikwerkzeugen, welche u. a. zum Stanzen, Nieten, Clinchen oder Fügen verwendet werden. Durch den Druckübersetzer kann bspw. ein pneumatischer Niederdruck im Bereich von bspw. 2 bis 10 bar in hydraulischen Hochdruck von 100 bis 600 bar umgewandelt werden. Dieser hydraulische Druck ist zum Antrieb von Arbeitskolben der mit dem Druckübersetzer verbindbaren Hydraulikwerkzeuge nutzbar.

Druckübersetzer der eingangs genannten Art kommen u. a. in Kraftfahrzeugwerkstätten zum Einsatz, wo sie bspw. zum Antrieb von hydraulischen Stanz- und Nietgeräten genutzt werden, die bei der Fahrzeugreparatur zum Einsatz kommen. Eine Versorgung der Druckübersetzer erfolgt dabei über die üblicherweise in Kraftfahrzeugwerkstätten vorhandenen Druckluftleitungen, welche direkt mit den Druckübersetzern koppelbar sind. Bei einem gleichbleibend hohen pneumatischen Druck kann dann ein zuverlässiger Betrieb des Druckübersetzers und eines mit dem Druckübersetzer verbundenen Hydraulikwerkzeugs gewährleistet werden.

Grundsätzlich ausreichend zum Betrieb der Druckübersetzer ist eine Druckluftversorgung. Für den Einsatz zusätzlicher elektrischer Funktionsbauteile, wie bspw. einer Beleuchtung, einer elektrischen Anzeigeeinheit oder elektrisch betriebener Sensoren ist es jedoch erforderlich, den Druckübersetzer zusätzlich mit einem Stromanschluss zu versehen, wobei in jedem Fall auch am Einsatzort eine entsprechende Stromversorgung vorhanden sein muss, was jedoch die Verwendung einschränkt. Darüber hinaus ist bei einem internationalen Einsatz ein dem jeweiligen Land angepasster Stromanschluss vorzusehen, wodurch ein internationaler Vertrieb verteuert und erschwert wird.

US 2938347 offenbart einen bekannten Druckübersetzer.

Hiervon ausgehend liegt der Erfindung die Aufgabe zu Grunde, einen Druckübersetzer bereitzustellen, der unabhängig von einem externen Stromanschluss die Verwendung elektrisch betriebener Funktionsbauteile ermöglicht.

Die Erfindung löst die Aufgabe durch einen Druckübersetzer mit den Merkmalen des Anspruchs 1. Vorteilhafte Weiterbildungen der Erfindung sind in den abhängigen Ansprüchen angegeben.

Kennzeichnend für den erfindungsgemäßen Druckübersetzer ist ein mit dem Drucklufteingang verbundener Druckluftgenerator, der mit einem internen elektrischen Verbraucher und/oder einer Anschlusseinheit zum Anschluss eines externen elektrischen Verbrauchers verbunden ist.

Über den Drucklufteingang ist der Druckübersetzer mit einer externen Druckluftquelle verbindbar. In einem KFZ-Reparaturbetrieb besteht bspw. die Möglichkeit, die von einem zentralen Kompressor bereitgestellte Druckluft von hierfür vorgesehenen Anschlussstellen zum Druckübersetzer zu führen, wobei hierfür üblicherweise geeignete Schlauchleitungen verwendet werden, die an den Drucklufteingang angeschlossen werden. Erfindungsgemäß ist an den Drucklufteingang ein Druckluftgenerator angeschlossen, der bei einem Durchströmen des Drucklufteingangs und der mit dem Drucklufteingang verbundenen Systemleitung ebenfalls mit Druckluft durchströmt wird.

Kennzeichnend für den Druckluftgenerator ist, dass dieser beim Durchströmen elektrische Energie erzeugt, dies geschieht bspw. durch ein vom Druckluftstrom angetriebenes Generatorrad. Diese elektrische Energie ist dazu nutzbar, um einen internen und/oder externen elektrischen Verbraucher zu betreiben. Hierbei kann es sich um Funktionsbauteile wie eine Anzeigeeinheit, wie ein Display oder eine einfache LED, eine Sende- und Empfangseinheit, eine akustische Signaleinheit, wie ein Lautsprecher, eine Steuer- und/oder Regelungseinheit, eine Messeinheit oder dergleichen handeln. Im Falle der Versorgung eines internen Verbrauchers, der an oder in dem Druckübersetzer angeordnet ist, ist dieser direkt mit dem Druckluftgenerator verbunden.

Eine mit dem Druckluftgenerator verbundene Anschlusseinheit, wie eine Steckereinheit, ermöglicht es, einen externen Verbraucher mit der durch den Druckluftgenerator produzierten elektrischen Energie zu versorgen. Hierzu wird der externe Verbraucher bzw. Funktionsbauteil, bspw. eine am Hydraulikwerkzeug angeordnete Messeinheit oder Anzeigeeinheit über eine geeignete, an das Anschlusselement anschließbare Kabelverbindung mit dem Druckluftgenerator verbunden.

Der erfindungsgemäße Druckübersetzer ermöglicht es, beliebige elektrische Funktionsbauteile zu betreiben, ohne dass es hierfür einer externen Stromquelle bedarf. Der Druckübersetzer lässt sich somit besonders variabel einsetzen, nachdem zur Energieerzeugung nur die grundsätzlich zu dessen Betrieb notwendige Druckluft erforderlich ist.

Der Druckluftgenerator lässt sich grundsätzlich an beliebiger Stelle im Druckluftstrom des Druckübersetzers anordnen. Denkbar ist bspw. auch die unmittelbare Verbindung mit dem Drucklufteingang, wobei der Druckluftgenerator dann sowohl vor als auch hinter dem Drucklufteingang angeordnet sein kann. Im Rahmen der Erfindung beziehen sich dabei Angaben wie "hinter" bzw. "nach" sowie "vor" auf die Richtung des Druckluftstroms durch den Druckübersetzer.

Nach der Erfindung ist jedoch vorgesehen, dass der Druckluftgenerator mit einem Generatoreingang und einem Generatorausgang mit der Systemleitung verbunden ist. Bei der Systemleitung handelt es sich um eine hinter dem Drucklufteingang angeordnete und mit dem Drucklufteingang verbundene Pneumatikleitung.

Gemäß der Erfindung ist der Druckluftgenerator über einen Generatoreingang und Generatorausgang in die Systemleitung integriert. In der Regel ist der Druckluftgenerator dadurch gemäß einer besonders vorteilhaften Ausgestaltung der Erfindung besonders einfach innerhalb eines Gehäuses des Druckübersetzers anordbar, wo er zuverlässig vor äußeren Einflüsse geschützt ist. Zudem kann auf zusätzliche Pneumatikleitungen zum Anschluss des Druckluftgenerators verzichtet werden, so dass sich der Druckübersetzer besonders platzsparend und kostengünstig herstellen lässt.

Die Ausgestaltung der Anschlusseinheit zum Anschluss eines externen Verbrauchers ist grundsätzlich frei wählbar. In einer möglichen Ausgestaltung wird die Anschlusseinheit durch eine separate Steckereinheit gebildet, an die externe Funktionsbauteile anschließbar sind. Nach einer besonders vorteilhaften Weiterbildung der Erfindung ist jedoch vorgesehen, dass die Anschlusseinheit an dem Hydraulikanschluss angeordnet ist.

Demgemäß weist der Hydraulikanschluss integrierte Kontakte zur Stromversorgung der externen Funktionsbauteile auf. Diese Ausgestaltung der Erfindung ermöglicht die Verwendung einer solchen Anschlussleitung, welche neben einem Transport der Hydraulikflüssigkeit auch eine elektrische Leitung zur Stromversorgung der externen Funktionsbauteile aufweist. Auf eine separate Stromleitung kann somit verzichtet werden, was die Handhabung des Druckübersetzers in ergänzender Weise verbessert. Die zur Verbindung mit dem Hydraulikanschluss vorgesehene Kupplung weist dabei ebenfalls Anschlusskontakte auf, welche bei montierter Kupplung an dem Hydraulikanschluss mit den in dem Hydraulikanschluss angeordneten Kontakten verbunden sind.

Die internen elektrischen Verbraucher bzw. Funktionsbauteile können gemäß den gewünschten Anforderungen an den Druckübersetzer grundsätzlich beliebig ausgebildet sein. Nach einer besonders vorteilhaften Ausgestaltung ist jedoch vorgesehen, dass der interne elektrische Verbraucher durch einen Akku, eine Datenspeichereinheit, eine Anzeigeeinheit und/oder ein Kommunikationseinheit zur drahtlosen Datenübertragung gebildet ist.

Nach einer vorteilhaften Weiterbildung der Erfindung ist die Anschlusseinheit mit einer an dem Hydraulikwerkzeug angeordneten Hydraulikwerkzeuganschlusseinheit verbindbar. Gemäß dieser Ausgestaltung weist ein mit dem Druckübersetzer verbindbares Hydraulikwerkzeug eine eigene Hydraulikwerkzeuganschlusseinheit auf, die es ermöglicht, Funktionsbauteile direkt am Hydraulikwerkzeug mit Energie zu versorgen. Die Hydraulikwerkzeuganschlusseinheit ist hierzu entsprechend der Anschlusseinheit am Druckübersetzer ausgebildet und mit dem Druckluftgenerator elektrisch leitend verbunden. Die Verbindung kann dabei direkt oder über eine mit der Anschlusseinheit am Druckübersetzer verbundene Leitung erfolgen. Die Verwendung einer Hydraulikwerkzeuganschlusseinheit erlaubt es, am Hydraulikwerkzeug zu nutzende Funktionsbauteile unmittelbar am Hydraulikwerkzeug anzuschließen. Auf lange Zuleitungen zu den Funktionsbauteilen kann somit verzichtet werden.

Nach einer Weiterbildung der Erfindung ist ferner vorgesehen, dass die Anzeigeeinheit ein e-paper Display aufweist. Die Verwendung eines e-paper Displays zeichnet sich durch den geringen Energiebedarf aus. Ferner bleiben Anzeigen auf dem Display auch dann lesbar, wenn keine Energieversorgung vorliegt.

Die Ausgestaltung des Druckübersetzers ist grundsätzlich frei wählbar. So kann dieser als Baugruppe ausgebildet sein, welche über eine flexible Schlauchleitung mit dem Hydraulikwerkzeug verbunden wird. Nach einer vorteilhaften Ausgestaltung der Erfindung ist jedoch vorgesehen, dass die Hydraulikeinheit und die Pneumatikeinheit zu einer einstückigen mobilen Handhabungseinheit zusammengefasst sind, die zum direkten Anschluss eines Hydraulikwerkzeugs mit einer Kopplungseinheit ausgebildet ist. Die Kopplungseinheit erlaubt den auswechselbaren, direkten, starren Anschluss des Hydraulikwerkzeugs ohne eine flexible Hydraulikleitung. Die Handhabungseinheit mit angeschlossenem Hydraulikwerkzeug zeichnet sich durch eine geringe Baugröße und gute Handhabbarkeit aus.

Ein Ausführungsbeispiel der Erfindung wird nachstehend mit Bezug auf die Zeichnungen erläutert. In den Zeichnungen zeigen:

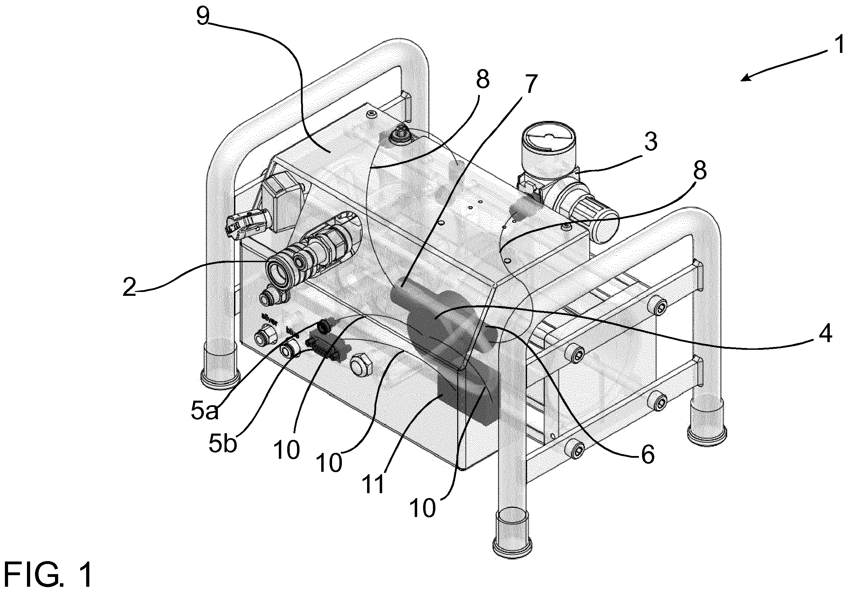

- Fig.1: eine perspektivische Ansicht eines Druckübersetzers

In Fig. 1 ist eine Ausführungsform eines Druckübersetzers 1 in einer perspektivischen Darstellung wiedergegeben. Der Druckübersetzer 1 weist einen Drucklufteingang 3 auf, welcher über eine pneumatische Systemleitung 8 mit einer hier nicht dargestellten, internen Hydraulikeinheit verbunden ist, in der der pneumatische Druck in hydraulischen Druck umgewandelt wird.

In die Systemleitung 8 ist ein Druckluftgenerator 4 integriert, wobei die Systemleitung 8 mit einem Generatoreingang 6 und einem Generatorausgang 7 verbunden ist.

Beim Durchströmen des Druckluftgenerators 4 erzeugt dieser elektrischen Strom. Dieser wird zum einen über eine elektrische Leitung 10 zu einer internen elektronischen Schaltung 11 sowie über eine weitere elektrische Leitung 10 zu einer in das Druckübersetzergehäuse 9 eingesetzten Anschlusseinheit 5a geleitet, so dass über die Anschlusseinheit 5a extern elektrische Verbraucher, d. h. beliebige Funktionsbauteile mit Strom versorgt werden können. Eine weitere Anschlusseinheit 5b ist über eine elektrische Leitung 10 mit der elektrischen Schaltung 11 verbunden, wobei die Anschlusseinheit 5b als digitaler Ausgang ausgeführt ist, über den in der elektronischen Schaltung abgelegte Daten ausgelesen werden können.

Neben der Anschlussmöglichkeit zum Anschluss von unterschiedlichen Funktionsbauteilen an die Anschlusseinheit 5a, 5b weist der Druckübersetzer 1 ferner einen Hydraulikanschluss 2 auf, über den ein hier nicht dargestelltes Hydraulikwerkzeug mit einem Hydraulikdruck versorgt werden kann.

### Bezugszeichenliste

- 1: Druckübersetzer
- 2: Hydraulikanschluss
- 3: Drucklufteingang
- 4: Druckluftgenerator
- 5a, 5b: Anschlusseinheit
- 6: Generatoreingang
- 7: Generatorausgang
- 8: Systemleitung
- 9: Druckübersetzergehäuse
- 10: elektrische Leitung
- 11: elektronische Schaltung

## Patentansprüche

1. Druckübersetzer zum Antrieb von Hydraulikwerkzeugen, mit
- einer Gas- oder Luftdruck angetriebenen Pneumatikeinheit mit einer an einen Drucklufteingang anschließenden Systemleitung und
- einer mit der Pneumatikeinheit verbundenen Hydraulikeinheit mit einem Hydraulikanschluss zum fluiddichten Anschluss des Hydraulikwerkzeugs an die Hydraulikeinheit,
**gekennzeichnet durch** einen mit dem Drucklufteingang (3) verbundenen Druckluftgenerator (4), der mit einem internen elektrischen Verbraucher (11) und/oder einer Anschlusseinheit (5a, 5b) zum Anschluss eines externen elektrischen Verbrauchers verbunden ist, wobei der Druckluftgenerator (4) in die Systemleitung (8) integriert ist und die Systemleitung (8) mit einem Generatoreingang (6) und einem Generatorausgang (7) verbunden ist.

2. Druckübersetzer nach Anspruch 1 oder 2, **dadurch gekennzeichnet, dass** die Anschlusseinheit (5a, 5b) in ein Druckübersetzergehäuse (9) integriert ist.

3. Druckübersetzer nach einem oder mehreren der vorhergehenden Ansprüche, **dadurch gekennzeichnet, dass** die Anschlusseinheit (5a, 5b) an dem Hydraulikanschluss (2) angeordnet ist.

4. Druckübersetzer nach einem oder mehreren der vorhergehenden Ansprüche, **dadurch gekennzeichnet, dass** der interne elektrische Verbraucher (11) durch einen Akku, eine Datenspeichereinheit, eine Anzeigeeinheit und/oder eine Kommunikationseinheit zur drahtlosen Datenübertragung gebildet ist.

5. Druckübersetzer nach einem oder mehreren der vorhergehenden Ansprüche, **dadurch gekennzeichnet, dass** die Anschlusseinheit (5a, 5b) mit einer an dem Hydraulikwerkzeug angeordneten Hydraulikwerkzeuganschlusseinheit verbindbar ist.

6. Druckübersetzer nach Anspruch 4, **dadurch gekennzeichnet, dass** die Anzeigeeinheit ein e-paper Display aufweist.

7. Druckübersetzer nach einem oder mehreren der vorhergehenden Ansprüche, **dadurch gekennzeichnet, dass** die Hydraulikeinheit und die Pneumatikeinheit zu einer einstückigen mobilen Handhabungseinheit zusammengefasst sind.

## Claims

1. A pressure booster for driving of hydraulic tools, with
- a gas or air pressure-driven pneumatic unit with a system line connecting to a compressed air inlet, and
- a hydraulic unit connected to the pneumatic unit with a hydraulic connection for connecting the hydraulic tool to the hydraulic unit in a fluidly sealing manner,
**characterized by** a compressed air generator (4) connected to the compressed air inlet (3) which is connected to an internal electrical consumer (11) and/or a connection unit (5a, 5b) for connecting an external electrical consumer, wherein the compressed air generator (4) is integrated into the system line (8) and the system line (8) is connected to a generator inlet (6) and a generator outlet (7).

2. The pressure booster according to claim 1 or 2, **characterized in that** the connection unit (5a, 5b) is integrated into a pressure booster housing (9).

3. The pressure booster according to one or more of the preceding claims, **characterized in that** the connection unit (5a, 5b) is arranged on the hydraulic connection (2).

4. The pressure booster according to one or more of the preceding claims, **characterized in that** the internal electrical consumer (11) is formed by a battery, a data storage unit, a display unit, and/or a communication unit for wireless data transmission.

5. The pressure booster according to one or more of the preceding claims, **characterized in that** the connection unit (5a, 5b) can be connected to a hydraulic tool connection unit arranged on the hydraulic tool.

6. The pressure booster according to claim 4, **characterized in that** the display unit has an e-paper display.

7. The pressure booster according to one or more of the preceding claims, **characterized in that** the hydraulic unit and the pneumatic unit are combined to form a one-piece mobile handling unit.

## Revendications

1. Multiplicateur de pression destiné à l'entraînement d'outils hydrauliques, comprenant
- une unité pneumatique entraînée par un gaz ou par une pression d'air, comprenant une conduite de système raccordée à une entrée d'air comprimé et
- une unité hydraulique reliée à l'unité pneumatique avec un raccord hydraulique pour le raccordement étanche au fluide de l'outil hydraulique à l'unité hydraulique,
**caractérisé par** un générateur d'air comprimé (4) relié à l'entrée d'air comprimé (3), lequel est relié à un consommateur électrique interne (11) et/ou à une unité de raccordement (5a, 5b) pour le raccordement d'un consommateur électrique externe, dans lequel le générateur d'air comprimé (4) est intégré dans la conduite de système (8) et la conduite de système (8) est reliée à une entrée de générateur (6) et à une sortie de générateur (7).

2. Multiplicateur de pression selon la revendication 1 ou 2, **caractérisé en ce que** l'unité de raccordement (5a, 5b) est intégrée dans un boîtier de multiplicateur de pression (9).

3. Multiplicateur de pression selon l'une ou plusieurs des revendications précédentes, **caractérisé en ce que** l'unité de raccordement (5a, 5b) est disposée sur le raccord hydraulique (2) .

4. Multiplicateur de pression selon l'une ou plusieurs des revendications précédentes, **caractérisé en ce que** le consommateur électrique interne (11) est formé par un accumulateur, une unité de stockage de données, une unité d'affichage et/ou une unité de communication pour la transmission de données sans fil.

5. Multiplicateur de pression selon l'une ou plusieurs des revendications précédentes, **caractérisé en ce que** l'unité de raccordement (5a, 5b) peut être reliée à une unité de raccordement d'outil hydraulique disposée sur l'outil hydraulique.

6. Multiplicateur de pression selon la revendication 4, **caractérisé en ce que** l'unité d'affichage comporte un écran e-paper.

7. Multiplicateur de pression selon l'une ou plusieurs des revendications précédentes, **caractérisé en ce que** l'unité hydraulique et l'unité pneumatique sont réunies en une unité de manipulation mobile monobloc.
